# EUROPÄISCHE PATENTSCHRIFT

(11) **EP 3 402 705 B1**
(45) Veröffentlichungstag und Bekanntmachung des Hinweises auf die Patenterteilung: **25.03.2020**
(21) Anmeldenummer: 16823275.9
(22) Anmeldetag: 21.12.2016
(51) Int. Cl.: B60T 13/68

(54) **STEUERVENTILEINRICHTUNG FÜR EINE ELEKTRISCHE PARKBREMSVORRICHTUNG UND ELEKTRISCHE PARKBREMSVORRICHTUNG**
CONTROL VALVE DEVICE FOR AN ELECTRIC PARKING BRAKE DEVICE, AND ELECTRIC PARKING BRAKE DEVICE
DISPOSITIF SOUPAPE DE COMMANDE POUR UN DISPOSITIF FREIN DE STATIONNEMENT ÉLECTRIQUE ET DISPOSITIF FREIN DE STATIONNEMENT ÉLECTRIQUE

(30) Priorität: 11.01.2016 DE 102016100289
(43) Veröffentlichungstag der Anmeldung: 21.11.2018
(73) Patentinhaber: KNORR-BREMSE Systeme für Nutzfahrzeuge GmbH, 80809 München (DE)
(72) Erfinder: PRINSEN, Fabian, 80634 München (DE)
(86) Internationale Anmeldenummer: PCT/EP2016/082179
(87) Internationale Veröffentlichungsnummer: WO 2017/121597

(56) Entgegenhaltungen:
- WO-A1-2014/009457
- DE-A1-102007 008 504
- DE-A1-102008 027 733

## Beschreibung

Die vorliegende Erfindung betrifft eine Steuerventileinrichtung für eine elektrische Parkbremsvorrichtung eines Fahrzeuges, insbesondere eines Nutzfahrzeuges sowie eine elektrische Parkbremsvorrichtung für eine pneumatische Bremsanlage eines Fahrzeuges, insbesondere eines Nutzfahrzeuges, mit einer Steuerventileinrichtung.

Aus dem Stand der Technik sind Steuerventileinrichtungen für elektrische Parkbremsvorrichtungen eines Fahrzeuges, insbesondere eines Nutzfahrzeuges und landwirtschaftlich genutzter Fahrzeuge bekannt.

Derzeitige verfügbare elektrische Parkbremsen können vergleichsweise aufwendig aufgebaut sein. Dies liegt daran, dass neben gängigen Ventiltypen einer elektronischen Luftaufbereitung wie Überströmventile, Druckbegrenzer, etc. ferner aufwendige Zusatzventile notwendig sind, wie z.B. ein pneumatisch bistabiles Ventil. Diese Ventile sind kostenintensiv und auch komplex, insbesondere hinsichtlich der zu verwendenden Dichtungen in Kombination mit einem komplexen Aufbau. Ferner kommt bei derartigen Konzepten systembedingt ein 3/2-Ventil zum Einsatz, das in der Regel die drei Anschlüsse voneinander trennt oder diese unterschiedlich miteinander verbindet.

So ist beispielsweise aus der WO 2014/009 457 A1 ein elektrisch betätigbares Feststellbremssystem mit einer Steuerventileinrichtung bekannt, die mehrere Dichtungen aufweist, wobei ferner in jedem Schaltzustand mindestens zwei Anschlüsse zum Ventil immer miteinander verbunden sind.

Aus der DE 10 2007 008 504 A1 ist ein Ventil bzw. ein Bistabilventil bekannt, das in beiden Schaltpositionen immer derart geschaltet ist, dass mindestens zwei Anschlüsse miteinander verbunden sind.

Aus DE 10 2011 101 438 A1 ist ein Parkbremsventil mit einem Raum bekannt, der stets von einem weiteren Innenraum des Ventils getrennt ist.

In der DE 10 2008 007 877 B3 wird ein Sicherheitsventil offenbart, bei dem stets zwei Anschlüsse miteinander verbunden sind.

Die EP 2 239 173 A2 offenbart ein pneumatisch gesteuertes 3/2-Wegeventil, insbesondere zur Steuerung einer pneumatischen Feststellbremse, mit einem in einer axialen Richtung in einem Gehäuse zwischen einem ersten Ventilsitz und einem zweiten Ventilsitz beweglichen Schaltkolben, wobei in einer zweiten Schaltposition nicht sämtliche Anschlüsse miteinander verbindbar sind.

Aus der DE 10 2006 041 012 A1 ist eine Ventileinheit, Bremssteuerungseinrichtung, Fahrzeugbremsanlage sowie Fahrzeug bekannt. Dabei sind in einer Schaltposition zwar alle Anschlüsse eines Ventils einer Ventileinheit voneinander getrennt, in der zweiten Schaltposition jedoch nicht sämtliche Anschlüsse miteinander verbindbar.

Die DE 10 2009 059 898 B4 offenbart ein pneumatisch bistabiles Ventilkonzept bzw. ein bistabiles Ventil. Dieses weist drei Dichtungen und eine komplexe Geometrie auf. Ferner muss die Luft durch den Ventilkolben hindurchgeleitet werden. Dadurch bedingt sind zwei axial vulkanisierte Dichtungen am Kolben nötig, die kostenaufwendig sind. Auch hier sind nicht alle Anschlüsse des Ventils miteinander verbindbar.

Es ist die Aufgabe der vorliegenden Erfindung, eine Steuerventileinrichtung für eine elektrische Parkbremsvorrichtung sowie eine elektrische Parkbremsvorrichtung mit einer Steuerventileinrichtung in vorteilhafter Weise weiterzubilden, insbesondere dahingehend, dass die Steuerventileinrichtung bzw. die Parkbremsvorrichtung einen mechanisch einfacheren und sichereren Aufbau aufweist und die Zuverlässigkeit im hohen Maße gewährleistet werden kann.

Diese Aufgabe wird erfindungsgemäß durch eine Steuerventileinrichtung mit den Merkmalen des Anspruchs 1 gelöst. Danach ist vorgesehen, dass eine Steuerventileinrichtung für eine elektrische Parkbremsvorrichtung eines Fahrzeuges, insbesondere eines Nutzfahrzeuges, einen ersten Arbeitsanschluss, einen zweiten Arbeitsanschluss, einen dritten Arbeitsanschluss, ein Gehäuse, eine Gehäusekammer, einen Zylinderraum, einen im Zylinderraum des Gehäuses geführten Schaltkolben, und eine Feder, mittels derer der Schaltkolben federbelastet ist, umfasst, wobei die Gehäusekammer mit dem dritten Arbeitsanschluss verbunden ist, wobei die Steuerventileinrichtung ferner einen zweigeteilten Druckraum aufweist, an dessen ersten Teilbereich der erste Arbeitsanschluss und an dessen zweiten Teilbereich der zweite Arbeitsanschluss angeschlossen ist, wobei in einem ersten Schaltzustand der Steuerventileinrichtung der erste Teilbereich des zweigeteilten Druckraums vom zweiten Teilbereich und von der Gehäusekammer, insbesondere fluiddicht, getrennt ist, und wobei in einem zweiten Schaltzustand der erste Teilbereich des zweigeteilten Druckraums mit dem zweiten Teilbereich und der Gehäusekammer verbunden ist.

Die Erfindung basiert auf dem Grundgedanken, dass eine elektrische Parkbremsvorrichtung aus einfacher aufgebauten Ventilen bereitgestellt wird. Hierzu wird ein bistabiles Ventil bzw. eine Steuerventileinrichtung verwendet, die in leichter Abwandlung zusammen mit einem Überströmventil strukturell vergleichbar wie ein sehr einfach aufgebautes 2/2-Wege-Ventil aufgebaut ist. Zwar sind aus dem Stand der Technik pneumatisch bistabile Ventilkonzept bekannt, jedoch weisen diese beispielsweise mehrere Dichtungen und komplexe Geometrien auf. Ferner erfordern diese, dass Luft durch den Ventilkoben hindurchgeleitet wird. Dadurch bedingt sind z. B. auch zwei axial vulkanisierte Dichtungen am Kolben nötig, die nur vergleichsweise kostenaufwendig herzustellen sind. Die Struktur, Funktion und Arbeitsweise einer Parkbremsvorrichtung, welche üblicherweise systembedingt ein 3/2-Wege-Ventil für eine Steuerventileinrichtung vorsieht, wird nun so verändert, dass bei diesem Ventil ein Ventilausgang wahlweise mit einen Eingang zur Belüftung oder mit einem anderen Eingang zur Entlüftung verbunden werden kann. In diesem Zusammenhang kann der bewegliche Ventilkolben der Steuerventileinrichtung innerhalb der Parkbremsvorrichtung dann wesentlich vereinfacht werden, indem alternativ eine andere Verschaltung des 3/2-Wege-Ventils vorgesehen wird, bei der in einem ersten Zustand alle drei Arbeitsanschlüsse verbunden und im einem zweiten Zustand alle drei Arbeitsanschlüsse voneinander getrennt sind. Zur Aktivierung der Parkbremsfunktion weist die Steuerventileinrichtung für die elektrische Parkbremsvorrichtung mindestens zwei druckbeaufschlagte Eingänge auf, um den nun vereinfachten Kolben in die geöffnete Stellung überführen zu können. Dabei entspricht der Kolben vorzugsweise in seiner vereinfachten Form dem Aufbau eines Überströmventils, das selbst nur ein 2/2-Wege-Ventil ist.

Wie vorstehend beschrieben, weist die Steuerventileinrichtung einen zweigeteilten Druckraum auf, an dessen ersten Teilbereich der erste Arbeitsanschluss und an dessen zweiten Teilbereich der zweite Arbeitsanschluss angeschlossen ist. Auf diese Weise können die einzelnen Teilbereiche des zweigeteilten Druckraumes mit einem druckbeaufschlagtem Fluid bzw. Druckluft über den jeweiligen Arbeitsanschluss versorgt werden.

In einem ersten Schaltzustand ist der erste Teilbereich des zweigeteilten Druckraums vom zweiten Teilbereich und von der Gehäusekammer, insbesondere fluiddicht, getrennt ist. Somit können die beiden Teilbereiche des zweigeteilten Druckraumes und die Gehäusekammer nicht nur voneinander getrennt werden, sondern sind auch einzeln mit unterschiedlichen Drücken beaufschlagbar.

In einem zweiten Schaltzustand ist der erste Teilbereich des zweigeteilten Druckraums mit dem zweiten Teilbereich und der Gehäusekammer verbunden. Folglich können in dem zweiten Schaltzustand die zwei Teilbereiche des zweigeteilten Druckraumes mit der Gehäusekammer verbunden werden bzw. sind miteinander verbunden. Ferner sind der erste und der zweite mit dem dritten Arbeitsanschluss verbunden. Auch kann aufgrund der Verbindung der Anschlüsse bzw. der beiden Teilbereiche des zweigeteilten Druckraumes und der Gehäusekammer ein Druckaustausch bzw. ein Fluidaustausch bzw. ein Druckluftaustausch stattfinden. So kann ein druckbeaufschlagtes Fluid bzw. Druckluft vom höheren Druckniveau in Richtung des niedrigeren Druckniveaus strömen.

Mit anderen Worten ausgedrückt kann also vorgesehen sein, dass im zweiten Schaltzustand die Gehäusekammer, der erste und zweite Teilbereich des zweigeteilten Druckraums miteinander verbunden sind. Somit besteht also zwischen dem ersten und zweiten Teilbereich des zweigeteilten Druckraums sowie der Gehäusekammer eine Verbindung. Anders ausgedrückt, befindet sich im zweiten Schaltzustand die Steuerventileinrichtung vorzugsweise in einem geöffneten Zustand, der einen Druckausgleich zwischen dem ersten und zweiten Teilbereich sowie der Gehäusekammer zulässt. Hingegen befindet sich die Steuerventileinrichtung im ersten Schaltzustand in einem geschlossenen Zustand, der-wie bereits erwähnt - günstigerweise die beiden Teilbereiche des zweigeteilten Druckraumes sowie die Gehäusekammer voneinander trennt. In dieser Konstellation ist es denkbar, dass sich am ersten Arbeitsanschluss bzw. innerhalb des ersten Teilbereichs des zweigeteilten Druckraumes, am zweiten Arbeitsanschluss bzw. Teilbereich innerhalb des zweiten Teilbereichs des zweigeteilten Druckraumes und am dritten Arbeitsanschluss bzw. innerhalb der Gehäusekammer drei unterschiedliche Druckverhältnisse einstellen.

Des Weiteren kann vorgesehen sein, dass der zweigeteilte Druckraum zumindest teilweise symmetrisch ausgebildet ist. Dies erleichtert den Aufbau der Steuerventileinrichtung und realisiert eine kostengünstige Herstellung.

Vorzugsweise ist der erste Teilbereich des zweigeteilten Druckraums konzentrisch zum zweiten Teilbereich angeordnet. Somit kann gewährleistet werden, dass die Kräfte, hervorgerufen durch den jeweiligen Druck innerhalb des ersten und zweiten Teilbereichs des zweigeteilten Druckraumes, in eine gemeinsame Richtung wirken, um sich vorteilhafterweise zu ergänzen.

Ferner ist es von Vorteil, wenn der erste Teilbereich des zweigeteilten Druckraums zumindest teilweise von dem Gehäuse begrenzt wird und der zweite Teilbereich des zweigeteilten Druckraums zumindest teilweise von einem Vorsprung begrenzt wird, der in den ersten Teilbereich hineinragt. Somit kann beispielweise der zweite Teilbereich des Druckraumes im Gehäuse räumlich innerhalb des Raumes für den ersten Teilbereichs ausgebildet werden. Anders ausgedrückt, kann mithilfe dieser Ausgestaltung z. B. der zweite Teilbereich des Druckraumes eine Teilmenge des ersten Druckraumes bilden, sodass sich das Volumen des ersten Teilbereichs um das Volumen des zweiten Teilbereichs verringert.

Der Vorsprung kann als umlaufender Vorsprung ausgebildet sein. Insbesondere ist möglich, dass der Vorsprung zylindrisch und/oder hülsenartig ausgebildet ist. Der Vorsprung kann sich rohrartig aus dem Gehäuse heraus in den Bereich des Druckraumes hinein erstrecken. Insbesondere kann vorgesehen sein, dass der Vorsprung einstückig am Gehäuse angeformt ist.

Darüber hinaus kann vorgesehen sein, dass der zweite Teilbereich zumindest teilweise von einer im Gehäuse verschieblich geführten Hülse begrenzt wird. Insbesondere kann in diesem Zusammenhang vorgesehen sein, dass die Hülse den zweiten Teilbereich des zweigeteilten Druckraums, insbesondere in Richtung des Schaltkolbens, variabel vergrößerbar ausbildet. Auf diese Weise kann der zweite Teilbereich des zweigeteilten Druckraums, der idealerweise innerhalb des ersten angeordnet ist, seine Größe derart anpassen, dass die Hülse den zweiten Teilbereich gegen den Schaltkolben abdichtet. Somit sind also der erste und der zweite Teilbereich des zweigeteilten Druckraums über den Schaltkolben, vorzugsweise im ersten Schaltzustand, voneinander getrennt bzw. trennbar.

Der Vorsprung und die Hülse können verschieblich ineinander geführt sein. Dadurch wird eine definierte Verschiebebewegung zwischen Hülse und Vorsprung ermöglicht, die einfach voreinstellbar bzw. vorbestimmbar ist. Außerdem wird durch eine derartige Ausführung erreicht, dass das Verhältnis zwischen erstem und zweitem Teilbereich einfach eingestellt werden kann. Denkbar ist, dass der Vorsprung einen größeren Durchmesser als die Hülse hat oder umgekehrt. Zur Abdichtung des zweiten Teilbereichs gegenüber dem ersten Teilbereich des Druckraums kann eine radiale Dichtung zwischen Vorsprung und Hülse vorgesehen sein. Die radiale Dichtung kann entweder in den Vorsprung oder die Hülse eingesetzt sein, während das jeweils andere Gegenstück bei der Verschiebebewegung über die Dichtung hinweg gleiten kann.

Die verschiebbare Hülse kann federbelastet sein. Dabei ist die verschiebbare Hülse vorzugsweise derart federbelastet, dass im ersten Schaltzustand der zweite Teilbereich des zweigeteilten Druckraums fluiddicht gegen den Schaltkolben abdichtbar bzw. abgedichtet ist. Dies kann beispielsweise dadurch erfolgen, dass die Federkraft, die auf die federbelastete verschiebbare Hülse wirkt, in Richtung des Schaltkolbens gerichtet bzw. orientiert ist, um eben durch Anlage gegen bzw. an den Schaltkolben eine Abdichtung zu schaffen.

Des Weiteren kann vorgesehen sein, dass der zweigeteilte Druckraum derart im Gehäuse der Steuerventileinrichtung angeordnet ist, dass eine Druckbeaufschlagung des zweigeteilten Druckraums den Schaltkolben entgegen der Federkraft der Feder des Schaltkolbens bewegt, sodass bei Druckbeaufschlagung im zweiten Schaltzustand die Gehäusekammer mit dem zweigeteilten Druckraum verbunden ist. Bei einer vorteilhaften Ausgestaltung bedeutet das, dass der zweigeteilte Druckraum vorzugsweise in axialer Verlängerung des Schaltkolbens angeordnet ist. Auf diese Weise ist eine einfache und kostengünstige Konstruktion der Steuerventileinrichtung möglich.

Des Weiteren betrifft die vorliegende Erfindung eine elektrische Parkbremsvorrichtung für eine pneumatische Bremsanlage eines Fahrzeuges, insbesondere eines Nutzfahrzeuges. Danach ist vorgesehen, dass eine elektrische Parkbremsvorrichtung für eine pneumatische Bremsanlage eines Fahrzeuges, insbesondere eines Nutzfahrzeuges, mit einer Druckluftquelle und einer Steuerventileinrichtung versehen ist, wobei die Steuerventileinrichtung einen ersten Arbeitsanschluss, einen zweiten Arbeitsanschluss und einen dritten Arbeitsanschluss aufweist, wobei die Steuerventileinrichtung wenigstens zwei Schaltzustände umfasst und derart ausgebildet ist, dass in einem ersten Schaltzustand der erste Arbeitsanschluss, der zweite und der dritte Arbeitsanschluss voneinander getrennt sind, und dass in einem zweiten Schaltzustand der erste, der zweite und der dritte Arbeitsanschluss miteinander verbunden sind.

Bei der Steuerventileinrichtung der elektrischen Parkbremsvorrichtung kann es sich insbesondere um eine Steuerventileinrichtung handeln, wie sie vorstehend bereits beschrieben wurde. Sämtliche strukturellen und/oder funktionalen Merkmale der Steuerventileinrichtung können allein oder in Kombination ebenfalls hier in der Steuerventileinrichtung der elektrischen Parkbremsvorrichtung vorgesehen sein und somit auch Merkmal der elektrischen Parkbremsvorrichtung.

Ferner kann vorgesehen sein, dass die Steuerventileinrichtung einen ersten Arbeitsanschluss, einen zweiten Arbeitsanschluss und einen dritten Arbeitsanschluss aufweist, wobei die Steuerventileinrichtung wenigstens zwei Schaltzustände umfasst und vorzugsweise derart ausgebildet ist, dass in einem ersten Schaltzustand der erste Arbeitsanschluss, der zweite und der dritte Arbeitsanschluss voneinander getrennt sind, und dass in einem zweiten Schaltzustand der erste, der zweite und der dritte Arbeitsanschluss miteinander verbunden sind. Demzufolge weist also die Steuerventileinrichtung der Parkbremsvorrichtung zwei Schaltzustände auf, von denen im ersten Schaltzustand die drei Arbeitsanschlüsse voneinander getrennt und im zweiten Schaltzustand alle Arbeitsanschlüsse, insbesondere der erste, der zweite und der dritte, miteinander verbunden sind. Somit können also im ersten Schaltzustand an den drei Arbeitsanschlüssen drei unterschiedliche Druckniveauzustände herrschen, wohingegen im zweiten Schaltzustand alle drei Arbeitsanschlüsse mit einem einheitlichen Druckniveau beaufschlagbar sind.

Weiter kann vorgesehen sein, dass die Parkbremsvorrichtung ein Entlüftungsventil und ein Versorgungsventil umfasst, wobei der erste Arbeitsanschluss mittels des Versorgungsventils mit der Druckluftquelle verbindbar und von der Druckluftquelle trennbar ist. Auf diese Weise kann also der erste Arbeitsanschluss mit Druckluft von der Druckluftquelle versorgt werden.

Dabei ist es möglich, dass der erste Arbeitsanschluss mittels des Entlüftungsventils entlüftbar ist. Dies erlaubt es den ersten Arbeitsanschluss mit Atmosphärendruck zu versorgen bzw. zu beaufschlagen.

In weiterer möglicher Ausgestaltung umfasst die Parkbremsvorrichtung ferner ein erstes Rückschlagventil, insbesondere ein federbelastetes Doppelrückschlagventil, mit einem Ausgang, einem ersten Eingang und einem zweiten Eingang. Das Rückschlagventil dient dazu, den ersten oder den zweiten Eingang mit dem Ausgang zu verbinden. Auf diese Weise kann also das Druckniveau mit dem Ausgang verbunden werden, welches im Vergleich der beiden Druckniveaus am ersten oder am zweiten Eingang höher ist.

Des Weiteren ist es möglich, dass der Ausgang, insbesondere des ersten Rückschlagventils, mit dem Entlüftungsventil verbunden ist. Dies erlaubt es, das Druckniveau am ersten oder zweiten Eingang auf Atmosphärendruck abzusenken.

Auch kann es vorgesehen sein, dass der erste Eingang, insbesondere des ersten Rückschlagventils, mit dem zweiten Arbeitsanschluss verbunden ist. Somit kann also der zweite Arbeitsanschluss auf Atmosphärendruck abgesenkt werden, wenn dessen Druck das Druckniveau des zweiten Eingangs des ersten Rückschlagventils überwiegt.

Außerdem kann vorgesehen sein, dass der zweite Eingang, insbesondere des ersten Rückschlagventils, mit dem ersten Arbeitsanschluss verbunden ist. Folglich kann der erste Arbeitsanschluss ebenfalls auf Atmosphärendruck abgesenkt werden, falls der dort anliegende Druck das Druckniveau des ersten Eingangs des ersten Rückschlagventils überwiegt.

Des Weiteren kann die Parkbremsvorrichtung ferner eine Steuer- und Entlüftungsventileinrichtung, ein zweites Rückschlagventil, insbesondere ein Doppelrückschlagventil, und ein Spezialventil aufweisen, wobei der zweite Arbeitsanschluss mittels der Steuer- und Entlüftungsventileinrichtung mit der Druckluftquelle verbindbar und von der Druckluftquelle trennbar ist. Auf diese Weise kann der zweite Arbeitsanschluss über die Steuer- und Entlüftungsventileinrichtung mittels Druckluft von der Druckluftquelle versorgt werden.

Darüber hinaus kann vorgesehen sein, dass das Spezialventil einen Steuereingang, einen Ein- und einen Ausgang aufweist. Somit kann das Spezialventilüber den Steuereingang den Ein- und Ausgang trennen oder verbinden.

Vorzugsweise ist der Steuereingang des Spezialventilmittels der Steuer- und Entlüftungsventileinrichtung entlüftbar. Das bedeutet, dass der Druck am Steuereingang auf Atmosphärendruck zurückführbar ist, wodurch das Steuerventil in einen nicht mit Druck beaufschlagten Schaltzustand bringbar ist.

In einem weiteren möglichen Ausführungsbeispiel der Parkbremseinrichtung kann der Eingang des Spezialventils in Abhängigkeit des am Steuereingang anliegenden Drucks mit dem Ausgang des Spezialventils verbindbar oder von dem Ausgang des Spezialventils trennbar sein. So ist es beispielsweise möglich, dass in einem Schaltzustand, in welchem der Steuereingang mit einem Druck oberhalb des Atmosphärendrucks beaufschlagt ist, der Eingang von dem Ausgang des Spezialventils getrennt wird. Ebenso ist es denkbar, dass in einem weiteren Schaltzustand des Spezialventils, in welchem der Steuereingang auf dem Druckniveau des Atmosphärendrucks liegt, der Eingang mit dem Ausgang des Spezialventils verbindbar ist.

Des Weiteren kann vorgesehen sein, dass die Parkbremsvorrichtung ferner ein zweites Rückschlagventil aufweist, insbesondere ein federbelastetes Doppelrückschlagventil, mit zwei Ein- und zwei Ausgängen, wobei der erste Eingang mit der Steuer- und Entlüftungsventileinrichtung und der erste Ausgang mit dem zweiten Arbeitsanschluss verbunden ist. Auf diese Weise ist es insbesondere möglich, ein höheres Druckniveau von der Steuer- und Entlüftungsventileinrichtung in Richtung des zweiten Arbeitsanschlusses zu führen, jedoch nicht umgekehrt.

Dabei ist weiter möglich, dass zwischen dem zweiten Rückschlagventil und der Steuer- und Entlüftungsventileinrichtung das Spezialventil angeordnet ist, dessen Steuereingang über die Steuer- und Entlüftungsventileinrichtung mit der Druckluftquelle verbindbar ist. Demzufolge ist der Steuereingang des Spezialventils über die Druckluftquelle steuerbar bzw. mit Druckluft versorgbar.

Insbesondere kann vorgesehen sein, dass das Spezialventil in Abhängigkeit des anliegenden Drucks am Steuereingang öffnet bzw. schließt. So kann der Eingang des Spezialventils in Abhängigkeit des am Steuereingang anliegenden Drucks mit dem Ausgang des Spezialventils verbunden werden oder schließen.

Weiter ist möglich, dass der zweite Ausgang des zweiten Rückschlagventils mit dem Eingang des Spezialventils verbunden ist. Dadurch kann über das zweite Rückschlagventil das dort anliegende höhere Druckniveau in Richtung des Eingangs des Spezialventils weitergeleitet werden.

Auch ist es denkbar, dass der zweite Eingang des zweiten Rückschlagventils mit dem dritten Arbeitsanschluss der Steuerventileinrichtung verbunden ist. Auf diese Weise kann also der dritte Arbeitsanschluss mit dem Spezialventil bzw. mit dessen Eingang oder mit dem zweiten Arbeitsanschluss verbunden werden, wobei die Verbindung vorzugsweise dann zustande kommt, wenn das Druckniveau, das am zweiten Eingang anliegt, im Vergleich zu dem am ersten Eingang höher ist.

Weitere Einzelheiten und Vorteile der vorliegenden Erfindung sollen nun anhand von in den Zeichnungen dargestellten Ausführungsbeispielen näher erläutert werden.

Es zeigen:
- Fig. 1: eine schematische Darstellung eines Ausführungsbeispiels für eine erfindungsgemäße Steuerventileinrichtung;
- Fig. 2: eine schematische Darstellung eines Ausführungsbeispiels für eine erfindungsgemäße elektrische Parkbremsvorrichtung in einem Parkzustand;
- Fig. 3: eine schematische Darstellung des Ausführungsbeispiels nach Figur 2 für eine erfindungsgemäße elektrische Parkbremsvorrichtung in einem Übergangszustand vom Parken zum Fahren;
- Fig. 4: eine schematische Darstellung des Ausführungsbeispiels nach Figur 3 für eine erfindungsgemäße elektrische Parkbremsvorrichtung in einem Fahrzustand;
- Fig. 5: eine schematische Darstellung des Ausführungsbeispiels nach Figur 4 für eine erfindungsgemäße elektrische Parkbremsvorrichtung in einem Übergangszustand vom Fahren zum Parken sowie in einem ersten Trailer Testzustand;
- Fig. 6: eine schematische Darstellung des Ausführungsbeispiels nach Figur 5 für eine erfindungsgemäße elektrische Parkbremsvorrichtung in einem zweiten Trailer-Testzustand;
- Fig. 7: eine schematische Darstellung eines weiteren Ausführungsbeispiels für eine erfindungsgemäße elektrische Parkbremsvorrichtung in einem Parkzustand;
- Fig. 8: eine schematische Darstellung des weiteren Ausführungsbeispiels nach Figur 7 für eine erfindungsgemäße elektrische Parkbremsvorrichtung in einem Übergangszustand vom Parken zum Fahren;
- Fig. 9: eine schematische Darstellung des weiteren Ausführungsbeispiels nach Figur 8 für eine erfindungsgemäße elektrische Parkbremsvorrichtung in einem Fahrzustand;
- Fig. 10: eine schematische Darstellung des weiteren Ausführungsbeispiels nach Figur 9 für eine erfindungsgemäße elektrische Parkbremsvorrichtung in einem Übergangszustand vom Fahren zum Parken sowie in einem ersten Trailer Testzustand; und
- Fig. 11: eine schematische Darstellung des weiteren Ausführungsbeispiels nach Figur 10 für eine erfindungsgemäße elektrische Parkbremsvorrichtung in einem zweiten Trailer-Testzustand.

In nachfolgender Beschreibung werden gleiche Bezugszeichen für gleiche Gegenstände verwendet.

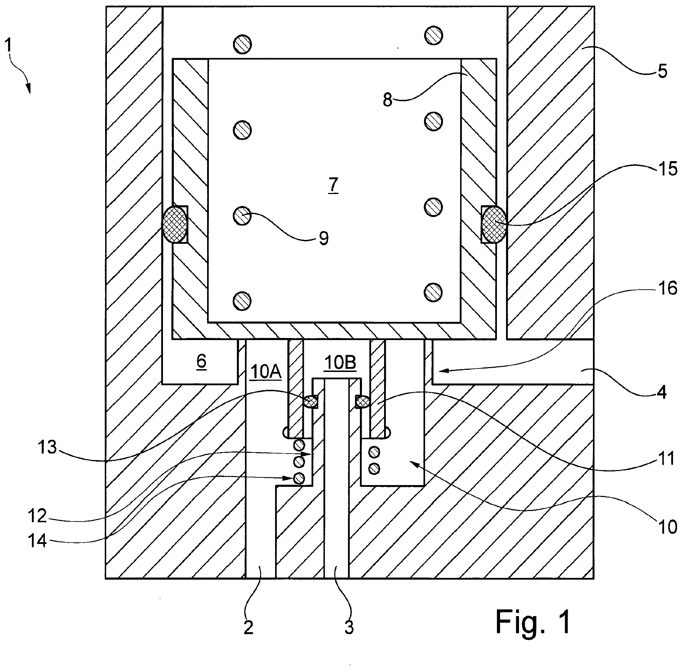

**Fig. 1** zeigt eine schematische Darstellung eines Ausführungsbeispiels einer erfindungsgemäßen Steuerventileinrichtung 1 für eine elektrische Parkbremsvorrichtung 20 eines Fahrzeuges, insbesondere eines Nutzfahrzeuges.

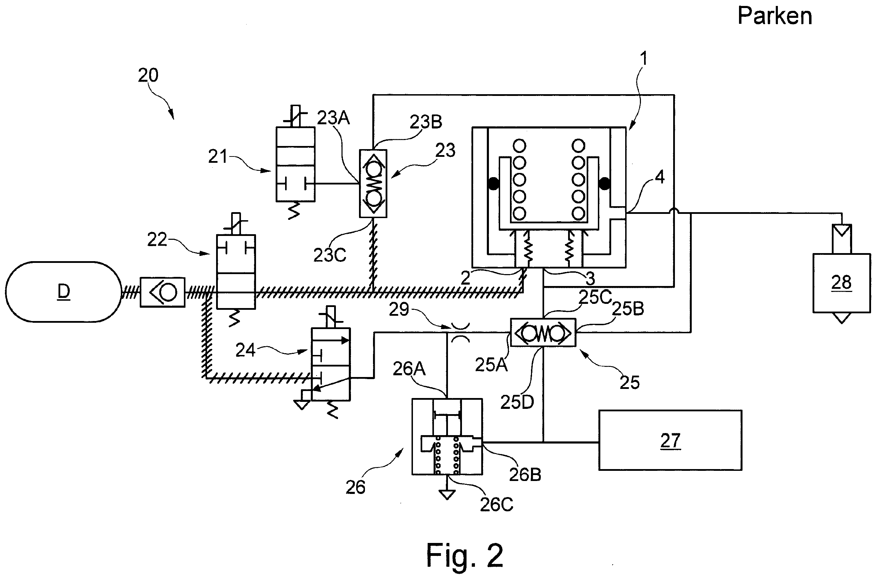

Die Steuerventileinrichtung 1 weist einen ersten Arbeitsanschluss 2, einen zweiten Arbeitsanschluss 3 und einen dritten Arbeitsanschluss 4 auf. Mithilfe der Arbeitsanschlüsse 2, 3, 4 ist die Steuerventileinrichtung 1 beispielsweise an die Pneumatikleitungen einer elektrischen Parkbremsvorrichtung 20 (siehe z.B. Fig. 2) anschließbar.

Die Steuerventileinrichtung 1 weist ferner ein Gehäuse 5, eine Gehäusekammer 6, die mit dem dritten Arbeitsanschluss 4 verbunden ist, einen Zylinderraum 7, einen im Zylinderraum des Gehäuses geführten Schaltkolben 8 und eine Feder 9, mittels derer der Schaltkolben 8 federbelastet ist, auf.

Die Steuerventileinrichtung 1 hat auch einen zweigeteilten Druckraum 10 mit einem ersten Teilbereich 10A und einem zweiten Teilbereich 10B, wobei an bzw. mit dem ersten Teilbereich 10A der erste Arbeitsanschluss 2 und an bzw. mit dem zweiten Teilbereich 10B der zweite Arbeitsanschluss 3 angeschlossen bzw. verbunden ist.

Der zweigeteilte Druckraum 10 ist dabei symmetrisch ausgebildet, wobei der erste Teilbereich 10A des zweigeteilten Druckraums 10 konzentrisch zum zweiten Teilbereich 10B angeordnet ist.

Unschwer aus Figur 1 zu erkennen, liegt der zweite Teilbereich 10B des zweigeteilten Druckraums 10 innerhalb des ersten Teilbereichs 10A. Anders ausgedrückt erstreckt sich ein Vorsprung 12 von dem Gehäuse 5 in Richtung des Schaltkolbens 8, um in seinem Inneren den zweiten Teilbereich 10B zu bilden. Der Vorsprung 12 ist zylindrisch und hülsenartig rohrartig ausgebildet und einstückig am Gehäuse 5 angeformt.

Der Vorsprung 12 ragt in den ersten Teilbereich 10A des zweigeteilten Druckraums 10 hinein, wobei der erste Teilbereich 10A von dem Vorsprung 12 bzw. von dem Gehäuse 5 umgeben bzw. gebildet wird.

Dabei wird der zweite Teilbereich 10B weiter von einer fluiddicht verschiebbaren Hülse 11 begrenzt bzw. gebildet, die verschiebbar entlang des Vorsprungs 12 ausgebildet ist. Dabei ist auch die Hülse 11 zylindrisch ausgebildet und weist einen größeren Durchmesser als der Vorsprung 12 auf. Grundsätzlich kann aber auch vorgesehen sein, dass der Vorspung 12 einen größeren Durchmesser als die Hülse 11 aufweist.

Hierbei bildet die verschiebbare Hülse 11 eine Verlängerung bzw. Vergrößerung für den zweiten Teilbereich 10B des zweigeteilten Druckraums 10, wodurch die Hülse den zweiten Teilbereich 10B in Richtung des Schaltkolbens 8 variabel vergrößerbar ausbildet.

Dabei ist die verschiebbare Hülse 11 des zweiten Teilbereichs 10B des zweigeteilten Druckraums 10 durch eine weitere Feder 14 federbelastet, wodurch die Hülse 11 in Richtung des Schaltkolbens 8 gedrückt wird. Auf diese Weise kann die Hülse 11 durch Anlage an dem Schaltkolben 8 den zweiten Teilbereich 10B des zweigeteilten Druckraums 10 bilden.

Bei Anlage gegen den Schaltkolben 8 bildet die Hülse 11 zusammen mit dem Vorsprung 12 einen abgeschlossenen Raum, der den zweiten Teilbereich 10B gegen den ersten Teilbereich 10A, insbesondere fluiddicht, verschließt.

Anders ausgedrückt, ist also die verschiebbare Hülse 11 derart federbelastet, dass im ersten Schaltzustand der zweite Teilbereich 10B des zweigeteilten Druckraums 10 fluiddicht gegen den Schaltkolben 8 abdichtbar ist.

Ein O-Ring 13, angeordnet in einer Ausnehmung des Vorsprungs 12, sorgt dafür, dass kein Fluid bzw. Druckluft zwischen den Vorsprung 12 und die Hülse 11 eindringen kann. Grundsätzlich kann aber auch eine andere geeignete radiale Dichtung vorgesehen sein, die sich zumindest im ersten Schaltzustand zwischen Vorsprung und Hülse befindet. Denkbar ist beispielsweise, eine aufvulkanisierte Radialdichtung vorzusehen.

Ein weiterer O-Ring 15 zwischen dem Gehäuse 5 und dem Schaltkolben 8 dient dazu, die beiden vorgenannten Elemente gegeneinander abzudichten, sodass aus der Gehäusekammer 6 keine Druckluft entweichen kann. Auch kann alternative an Stelle des O-Rings 15 eine geeignete radiale Dichtung vorgesehen sein, z.B. eine aufvulkanisierte Radialdichtung.

Wie man Figur 1 ferner entnehmen kann, weist das Gehäuse 5 einen Ventilsitz 16 auf, auf dem der Schaltkolben 8 aufsitzt, um die Gehäusekammer 6 vom zweigeteilten Druckraum 10 zu trennen. Der Ventilsitz 16 erstreckt sich dabei in Richtung des Schaltkolbens 8 in die Gehäusekammer 6.

Die Steuerventileinrichtung 1 weist wenigstens zwei Schaltzustände auf, wobei in einem ersten Schaltzustand der erste Teilbereich 10A des zweigeteilten Druckraums 10 vom zweiten Teilbereich 10B und von der Gehäusekammer 6, fluiddicht getrennt ist. Im Ergebnis führt dies dazu, dass es für ein Fluid bzw. Druckluft keine Möglichkeit gibt vom ersten oder zweiten oder dritten Arbeitsanschluss zu einem der anderen Arbeitsanschlüsse zu gelangen bzw. zu strömen.

Im zweiten Schaltzustand ist der erste Teilereich 10A des zweigeteilten Druckraums 10 mit dem zweiten Teilbereich 10B und der Gehäusekammer 6 verbunden, sodass die drei Arbeitsanschlüsse 2, 3, 4 miteinander verbunden sind, wodurch ein Fluid bzw. Druckluft von jedem der drei Anschlüsse zu den anderen strömen kann. Dadurch steht also im zweiten Schaltzustand die Gehäusekammer 6 mit dem ersten und zweiten Teilbereich 10A, 10B des zweigeteilten Druckraums 10 in Fluidkommunikation.

Der zweigeteilte Druckraum 10 ist derart im Gehäuse 5 der Steuerventileinrichtung 1 angeordnet, dass eine Druckbeaufschlagung des zweigeteilten Druckraums 10 den Schaltkolben 8 entgegen der Federkraft der Feder 9 bewegt, sodass bei Druckbeaufschlagung im zweiten Schaltzustand die Gehäusekammer 6 mit dem zweigeteilten Druckraum 10 verbindbar ist.

Um die Arbeitsanschlüsse 2, 3, 4 mit einander zu verbinden, muss der Druck in dem zweigeteilten Druckraum 10 bzw. muss die Druckkraft innerhalb des ersten und zweiten Teilbereichs 10A, 10B die Federkraft der Feder 9 betragsmäßig übersteigen. Ist die Druckkraft im zweigeteilten Druckraum 10 höher als die Federkraft der Feder 9, hebt sich der Schaltkolben 8 vom Ventilsitz 16 ab. Auf diese Weise kann ein Fluid bzw. Druckluft vom ersten und zweiten Arbeitsanschluss 2, 3 zum dritten Arbeitsanschluss 4 strömen.

Für den Fall, dass die Druckkraft der Arbeitsanschlüsse 2, 3 nicht mehr ausreicht den Schaltkolben 8 entgegen der Federkraft zu drücken, d.h. das der anliegende Druck unter den Schwellenwert fällt, der als Schaltpunkt definiert ist, bewegt sich der Schaltkolben 8 auf den Ventilsitz 16 zurück und unterbricht die Verbindung der Arbeitsanschlüsse 2, 3, 4.

In **Fig. 2** ist eine schematische Darstellung eines Ausführungsbeispiels für eine erfindungsgemäße elektrische Parkbremsvorrichtung 20 dargestellt, wobei sich die Parkbremsvorrichtung im Zustand "Parken" bzw. im Parkzustand befindet.

Die elektrische Parkbremsvorrichtung 20 für eine pneumatische Bremsanlage eines Fahrzeuges, insbesondere eines Nutzfahrzeuges, umfasst eine Druckluftquelle D und die bereits oben beschriebene Steuerventileinrichtung 1.

Die Steuerventileinrichtung 1 weist - wie bereits erläutert - einen ersten Arbeitsanschluss 2, einen zweiten Arbeitsanschluss 3 und einen dritten Arbeitsanschluss 4 auf, wobei die Steuerventileinrichtung 1 wenigstens zwei Schaltzustände einnehmen kann.

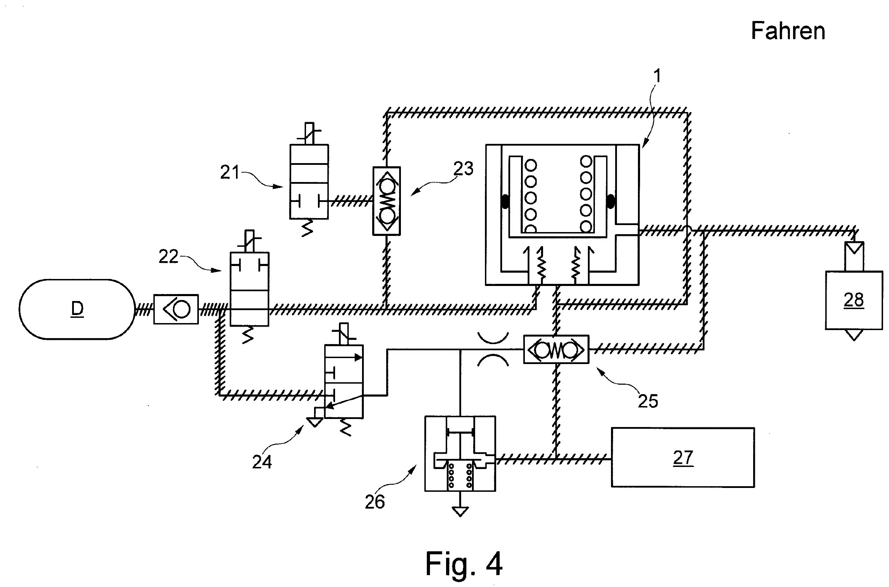

In einem ersten Schaltzustand sind der erste Arbeitsanschluss 2, der zweite 3 und der dritte Arbeitsanschluss 4 voneinander getrennt (siehe Fig. 2, Parkstellung), wohingegen in einem zweiten Schaltzustand der erste 2, der zweite 3 und der dritte Arbeitsanschluss 4 miteinander verbunden sind (siehe Fig. 4, Fahrstellung). So kann also im ersten Schaltzustand keine Druckluft bzw. kein Fluid von einem Arbeitsanschluss zu einem anderen strömen, während dies im zweiten Schaltzustand möglich ist.

Die elektrische Parkbremsvorrichtung 20 umfasst ferner ein Entlüftungsventil 21, hier ein 2/2-Wege-Magnetventil, das an einen Entlüfungsausgang angeschlossen ist, und ein Versorgungsventil 22, hier auch als 2/2-Wege-Magnetventil ausgeführt.

Ferner ist in Fig. 2 dargestellt, wie der erste Arbeitsanschluss 2 mittels des Versorgungsventils 22 mit der Druckluftquelle D verbunden ist. Der erste Arbeitsanschluss 2 ist mittels des Entlüftungsventils 21 entlüftbar.

Figur 2 zeigt ferner, dass die elektrische Parkbremsvorrichtung 20 ein erstes federbelastetes Doppelrückschlagventil 23 mit einem Ausgang 23A, einem ersten Eingang 23B und einem zweiten Eingang 23C umfasst.

Der Ausgang 23A ist dabei mit dem Entlüftungsventil 21 verbunden, wobei der erste Eingang 23B mit dem zweiten Arbeitsanschluss 3 und der zweite Eingang 23C mit dem ersten Arbeitsanschluss 2 verbunden ist.

Das Entlüftungsventil 21 ist derart absperrbar ausgeführt, dass der Ausgang 23A des ersten federbelasteten Doppelrückschlagventils 23 entweder absperrbar ist, sodass keine Druckluft aus der elektrischen Parkbremsvorrichtung 20 entweichen kann, oder dass das Entlüftungsventil 21 offen ist, sodass Druckluft aus der Parkbremsvorrichtung 20 abgelassen werden kann bzw. sodass die Parkbremsvorrichtung 20 an dieser Stelle entlüftet werden kann.

Des Weiteren ist in Figur 2 zu erkennen, dass die elektrische Parkbremsvorrichtung 20 eine Steuer- und Entlüftungsventileinrichtung 24, ein zweites federbelastetes Doppelrückschlagventil 25 und ein Spezialventil 26 aufweist.

Hierbei handelt es sich bei der Steuer- und Entlüftungsventileinrichtung 24 um ein 3/2-Wege-Magnetventil mit Entlüftungsfunktion, die durch eine Feder in den in Figur 2 dargestellten Zustand zurückstellbar ist. Das Spezialventil 26 hingegen ist druckluftgesteuert.

Der zweite Arbeitsanschluss 3 ist dabei mittels der Steuer- und Entlüftungsventileinrichtung 24 mit der Druckluftquelle D verbindbar und von der Druckluftquelle D trennbar.

Das Spezialventil 26 weist einen Steuereingang 26A, einen Eingang 26B und einen Ausgang 26C auf, wobei der Steuereingang 26A mittels der Steuer- und Entlüftungsventileinrichtung 24, insbesondere über deren Luftablass, entlüftbar ist.

Der Eingang 26B des Spezialventils 26 ist in Abhängigkeit des am Steuereingang 26A anliegenden Drucks mit dem Ausgang 26C des Spezialventils 26 verbindbar oder von dem Ausgang 26C des Spezialventils 26 trennbar.

Das zweite federbelastete Doppelrückschlagventil 25 hat zwei Ein- und zwei Ausgänge 25A, 25B, 25C, 25D, wobei der erste Eingang 25A mit der Steuer- und Entlüftungsventileinrichtung 24 und der erste Ausgang 25C mit dem zweiten Arbeitsanschluss 3 verbunden ist. Vor dem ersten Eingang 25A ist eine Drossel 29 angebracht.

Zwischen dem zweiten federbelasteten Doppelrückschlagventil 25 und der Steuer- und Entlüftungsventileinrichtung 24 ist das Spezialventil 26 angeordnet, dessen Steuereingang 26A über die Steuer- und Entlüftungsventileinrichtung 24 mit der Druckluftquelle D verbindbar ist.

Dabei kann das Spezialventil 26 in Abhängigkeit des anliegenden Drucks am Steuereingang 26A öffnen oder schließen, wobei der zweite Ausgang 25D des zweiten federbelasteten Doppelrückschlagventils 25 mit dem Eingang 26B des Spezialventils 26 und der zweite Eingang 25B des zweiten federbelasteten Doppelrückschlagventils 25 mit dem dritten Arbeitsanschluss 4 der Steuerventileinrichtung 1 und einem Relaisventil 28 verbunden ist.

Um das Spezialventil 26 über dessen Steuereingang 26A zu steuern, kann dieser mittels der Steuer- und Entlüftungsventileinrichtung 24 entweder mit Druckluft aus der Druckluftquelle D beaufschlagt oder aber entlüftet werden.

Bei der Beaufschlagung mit Druckluft sperrt das Spezialventil 26. Bei der Entlüftung wird der Teil der elektrischen Parkbremsvorrichtung 20 entlüftet, der sich zwischen dem Steuereingang 26A des Spezialventils 26, dem ersten Eingang 25A des zweiten federbelasteten Doppelrückschlagventils 25 und der Steuer- und Entlüftungsventileinrichtung 24 befindet. Dies erlaubt es dem Spezialventil 26 wieder in eine geöffnete Stellung zurückzukehren, wobei der Eingang 26B mit dem Ausgang 26C verbunden werden kann.

Ferner umfasst die elektrische Parkbremsvorrichtung 20 ein Anhängersteuermodul 27 sowie das Relaisventil 28. Nicht dargestellt ist die Leitung von der Druckluftquelle D zur ebenfalls nicht dargestellten Parkbremse des Nutzfahrzeugs (Zugfahrzeugs), die je nach Ansteuerung des Relaisventils durch das Relaisventil 28 freigegeben oder gesperrt wird.

Das Anhängersteuermodul 27 ist zwischen dem zweiten Ausgang 25D des zweiten federbelasteten Doppelrückschlagventils 25 und dem Eingang 26B des Spezialventils 26 angeschlossen.

Das Relaisventil 28 steht in Verbindung mit dem dritten Arbeitsanschluss 4 sowie mit dem zweiten Eingang 25B des zweiten federbelasteten Doppelrückschlagventils 25 und weist einen Luftablass auf. Genauer dargestellt, ist der pneumatische Steuereingang des Relaisventils 28 mit dem dritten Arbeitsanschluss 4 und dem zweiten Eingang 25B verbunden.

In einer nicht dargestellten Variante der elektrischen Parkbremseinrichtung 20 ist das Relaisventil 28 ferner mit der Druckluftquelle D dergestalt verbunden, dass in Abhängigkeit eines anliegenden Drucks am pneumatischen Steuereingang das Relaisventil ein ebenfalls nicht dargestelltes, weiteres Bauteil mit Druckluft aus der Druckluftquelle D versorgen kann.

Die hier vorgestellte elektrische Parkbremsvorrichtung 20 weist wenigstens fünf Zustände auf, die in den Figuren 2 bis 6 dargestellt sind.

Hierbei sind die mit Druckluft von der Druckluftquelle beaufschlagten Verbindungsleitungen im Vergleich zu anderen Leitungen, in denen lediglich Atmosphärendruck herrscht, durch Schraffur hervorgehoben.

In einem ersten Zustand bzw. in einem Parkzustand, dargestellt in Figur 2, verbindet das Versorgungsventil 22 die Druckluftquelle D mit dem ersten Arbeitsanschluss 2. Ferner sperrt die Steuer- und Entlüftungsventileinrichtung 24, wodurch der Steuereingang 26A und der erste Eingang des zweiten federbelasteten Doppelrückschlagventils 25 entlüftet werden.

Ferner ist im Parkzustand das Spezialventil 26 geöffnet und die Steuerventileinrichtung 1 befindet sich im ersten Schaltzustand, in welchem die Arbeitsanschlüsse 2, 3, 4 voneinander getrennt sind.

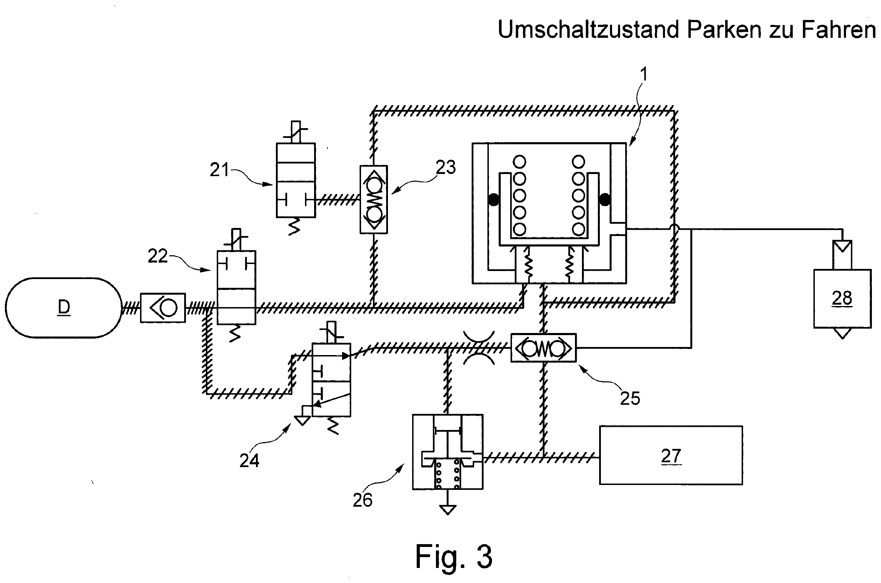

**Fig. 3** zeigt eine schematische Darstellung des Ausführungsbeispiels nach Figur 2 für eine erfindungsgemäße elektrische Parkbremsvorrichtung 20 in einem zweiten Zustand bzw. in einem Übergangszustand vom Parken zum Fahren, auch "Switch to Drive" Zustand genannt.

In diesem Übergangszustand wird die elektrische Parkbremsvorrichtung 20 ausgehend vom Parkzustand aus Figur 2 in den "Switch to Drive" Zustand, dargestellt in Figur 3, überführt.

Um die Parkbremsvorrichtung 20 vom Parken zum Fahren zu überführen, wird die Steuer- und Entlüftungseinrichtung 24 so geschaltet, dass die Druckluft aus der Druckluftquelle D weiter zum Steuereingang 26A des Spezialventils 26 und dem ersten Eingang 25A des zweiten federbelasteten Doppelrückschlagventils 25 gelangt.

Dadurch wird der Steuereingang 26A durch die Druckluft mit einer Kraft beaufschlagt, die das Spezialventil 26 schließt bzw. die Verbindung vom Eingang 26B zum Ausgang 26C des Spezialventils 26 unterbricht.

Da der Druck am ersten Eingang 25A des zweiten federbelasteten Doppelrückschlagventils 25 im Vergleich zu dessen zweiten Eingang 25B größer ist, gelangt die Druckluft aus der Druckluftquelle D über den zweiten Ausgang 25D hin zum Anhängersteuermodul 27 und zum Eingang 26B des Spezialventils 26.

Selbstverständlich gelangt die Druckluft aus der Druckluftquelle D über den ersten Ausgang 25C zum zweiten Arbeitsanschluss 2 sowie zum ersten Eingang 23B des ersten federbelasteten Doppelrückschlagventils 23.

Im Ergebnis sind nun im "Switch to Drive" Zustand, dargestellt in Figur 3, der erste 2 unter dritte Arbeitsanschluss 3 sowie der Steuereingang 26A des Spezialventils 26 sowie dessen Eingang 26B und das Anhängersteuermodul 27 mit Druckluft aus der Druckluftquelle D beaufschlagt.

**Fig. 4** zeigt eine schematische Darstellung des Ausführungsbeispiels nach Figur 3 für eine erfindungsgemäße elektrische Parkbremsvorrichtung 20 in einem dritten Zustand bzw. in einem "Drive" Zustand.

In diesem hat sich der Schaltkolben 8 der Steuerventileinrichtung 1 aufgrund der Druckluft, die an dem ersten und zweiten Arbeitsanschluss 2, 3 anliegt, nach oben bewegt, und somit den ersten und zweiten Arbeitsanschluss 2, 3 mit dem dritten Arbeitsanschluss 4 verbunden. Dadurch gelangt nun Druckluft aus der Druckluftquelle D hin zum Relaisventil 28.

Im Vergleich zum vorigen zweiten Zustand bzw. zum "Switch to Drive" Zustand wurde lediglich die Steuer- und Entlüftungsventileinrichtung 24 stromlos geschaltet.

Nun unterbricht diese die Zufuhr von Druckluft aus der Druckluftquelle D zum Steuereingang 26A des Spezialventils 26 und zum ersten Eingang 25A des zweiten federbelasteten Doppelrückschlagventils 25. Dadurch wird der Steuereingang 26A und der erste Eingang 25A entlüftet, sodass an diesen Atmosphärendruck anliegt.

Obwohl der Steuereingang 26A des Spezialventils 26 entlüftet ist, befindet sich dieses noch im geschlossenen Zustand, das heißt der Eingang 26B ist vom Ausgang 26C getrennt.

Die weiteren Verbindungsleitungen sowie die weiteren Ein- und Ausgänge weisen nach wie vor die Druckluft bzw. den Druck aus der Druckluftquelle D auf.

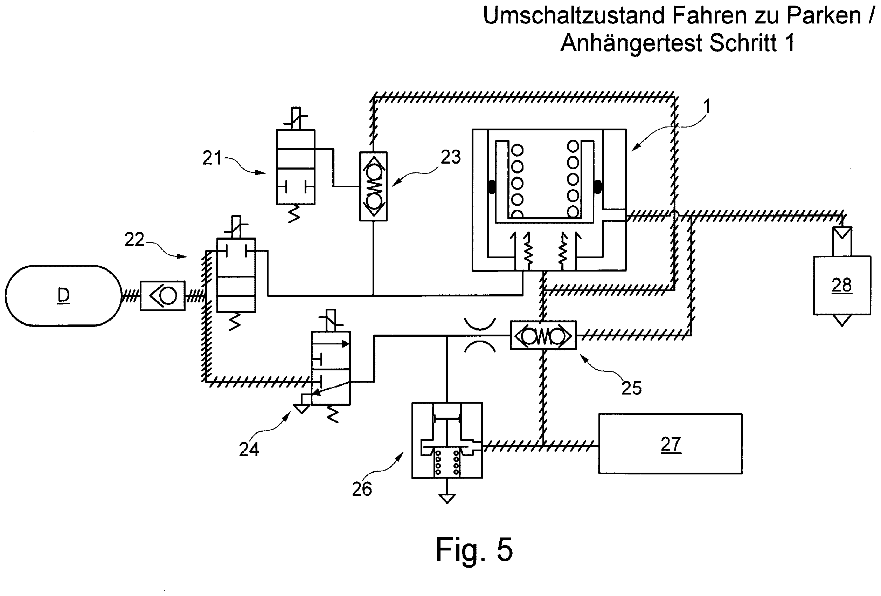

**Fig. 5** zeigt eine schematische Darstellung des Ausführungsbeispiels nach **Fig. 4** für eine erfindungsgemäße elektrische Parkbremsvorrichtung 20 in einem dritten Zustand bzw. in einem Übergangszustand vom Fahren zum Parken sowie in einem ersten Trailer-Testzustand.

Im Vergleich zum vorigen dritten Zustand bzw. zum "Drive" Zustand werden das Versorgungsventil 22 und das Entlüftungsventil 21 bestromt und dadurch geschaltet.

Dabei trennt nun das Versorgungsventil 22 die Druckluftquelle D vom ersten Arbeitsanschluss 2 und vom zweiten Eingang 23C des ersten federbelasteten Doppelrückschlagventils 23.

Ferner befindet sich das Entlüftungsventil 21 in einem Zustand, der es erlaubt Druckluft über den Ausgang 23A aus der elektrischen Parkbremsvorrichtung 20 zu entlassen.

Aufgrund oben dargestellter Veränderungen entweicht zuerst die Druckluft vom ersten Arbeitsanschluss 2 über den zweiten Eingang 23C hin zum Ausgang 23A des erste federbelasteten Doppelrückschlagventils 22.

Aufgrund dessen kann sich der Schaltkolben 8 der Steuerventileinrichtung 1 nach unten bewegen, wodurch die Zufuhr an Druckluft aus der Druckluftquelle D hin zum Relaisventil 28 und zum Anhängersteuermodul 27 unterbrochen wird.

Wie Figur 5 zeigt sind noch der erste Eingang 23B des ersten federbelasteten Doppelrückschlagventils 23 sowie der zweite Arbeitsanschluss 3, der zweite Ausgang 25D, der erste Ausgang 25C, der zweite Eingang 25B des zweiten federbelasteten Doppelrückschlagventils 25, das Relaisventil 28, das Anhängersteuermodul 27 und der Eingang 26B des Spezialventils 26 mit Druckluft aus der Druckluftquelle D beaufschlagt.

Aufgrund der Verbindungen vorgenannter Bestandteile der elektrischen Parkbremsvorrichtung 20 mit dem ersten Eingang 23B des ersten federbelasteten Doppelrückschlagventils 23 wird auch von diesen die Druckluft über das geöffnete Entlüftungsventil 21 nach außen entlassen.

Dadurch wird im Ergebnis ferner der Eingang 26B des Spezialventils 26 mit dessen Ausgang 26C verbunden, um somit einen weiteren, insbesondere schnelleren, Abfluss der Druckluft aus der elektrischen Parkbremsvorrichtung 20 zu ermöglichen.

Zusammengefasst haben vorige Maßnahmen zur Folge, dass die elektrische Parkbremsvorrichtung 20 in den Parkzustand, dargestellt in Figur 2, zurückgeführt wird.

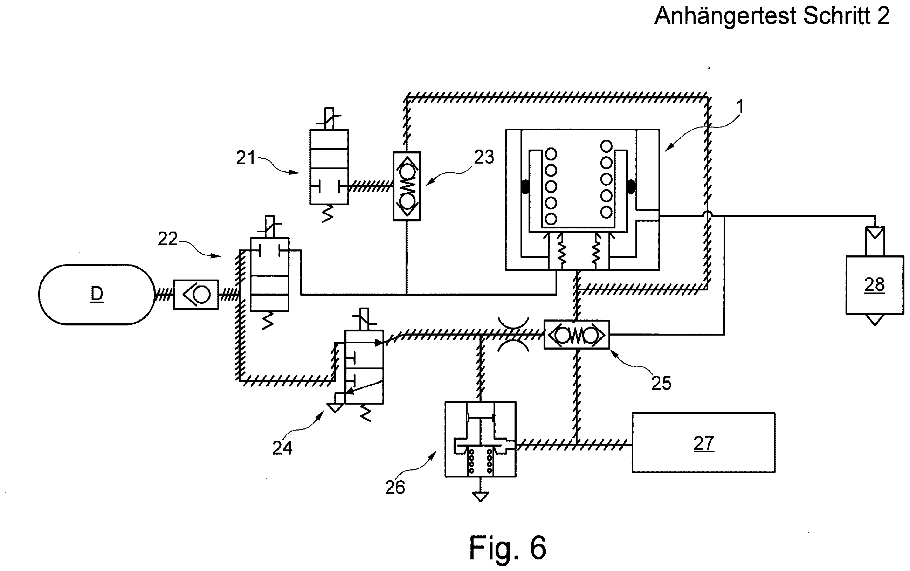

Unter Bezugnahme auf die Figuren 5 und 6 wird die vorgeschriebene Trailer-Test-Funktion erläutert.

Dabei zeigt Figur 5 eine schematische Darstellung des Ausführungsbeispiels nach den Figuren 2 bis 4 für eine erfindungsgemäße elektrische Parkbremsvorrichtung 20 in einem ersten Trailer-Testzustand, wobei **Fig. 6** die elektrische Parkbremsvorrichtung 20 in einem zweiten Trailer-Testzustand darstellt.

Der erste Trailer-Testzustand ist identisch mit dem dritten Zustand bzw. dem Übergangszustand vom Fahren zum Parken aus Figur 5. In diesem Zusammenhang wird auf die dortigen Ausführungen verwiesen, welche für den ersten Trailer-Testzustand analog anwendbar sind.

Im zweiten Trailer-Testzustand der elektrischen Parkbremsvorrichtung 20 nach Figur 6 hat sich der Schaltkolben 8 der Steuerventileinrichtung 1 nach unten bewegt, wodurch die Arbeitsanschlüsse 2, 3, 4 voneinander getrennt werden.

Im Vergleich zum vorigen ersten Trailer-Testzustand wurden die Steuer- und Entlüftungsventileinrichtung 24 sowie das Entlüftungsventil 21 geschalten.

Nun verbindet die Steuer- und Entlüftungsventileinrichtung 24 die Druckluft aus der Druckluftquelle D mit dem Steuereingang 26A des Spezialventils 26 und dem ersten Eingang 25A des zweiten federbelasteten Doppelrückschlagventils 25.

Dadurch werden der Steuereingang 26A und der erste Eingang 25A sowie das Anhängersteuermodul 27 und der Eingang 26B des Spezialventils 26 mit Druckluft aus der Druckluftquelle D beaufschlagt.

Das Entlüftungsventil 21 hingegen sperrt, sodass keine Druckluft von dem ersten Ausgang 25C des zweiten federbelasteten Doppelrückschlagventil 25 über den ersten Eingang 23B des ersten federbelasteten Doppelrückschlagventil 23 aus der elektrischen Parkbremsvorrichtung 20 entweichen kann.

Im Ergebnis wird also das Anhängersteuermodul 27 mit Druckluft aus der Druckluftquelle D versorgt, wodurch eine Parkbremse (nicht dargestellt), die am Anhängersteuermodul 27 angeschlossen ist, am Trailer gelöst wird, was für den Trailer-Test erforderlich ist.

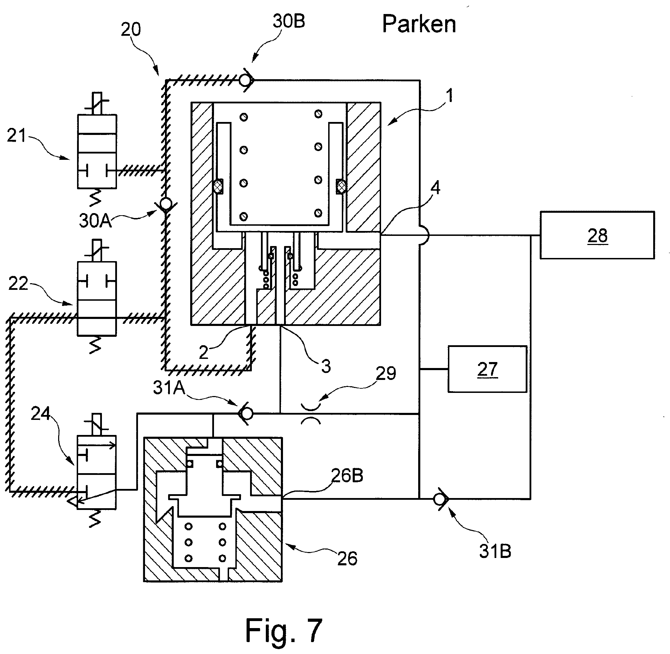

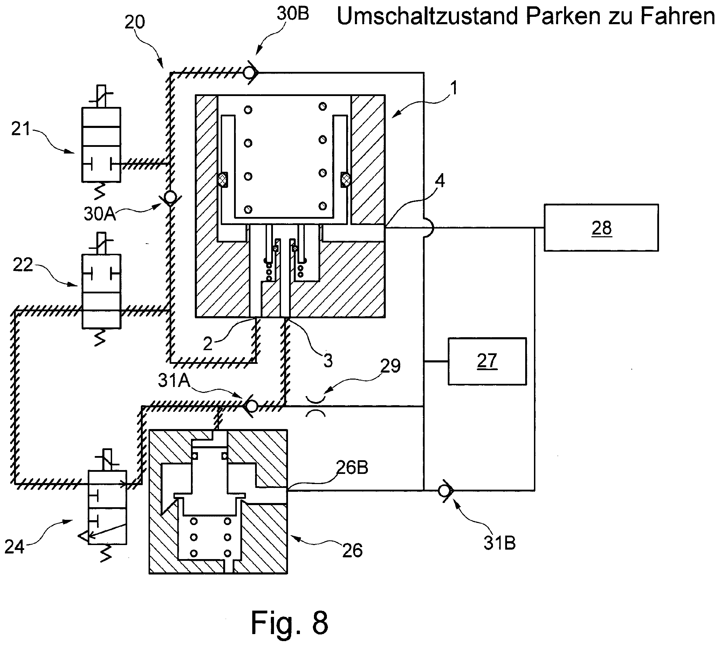

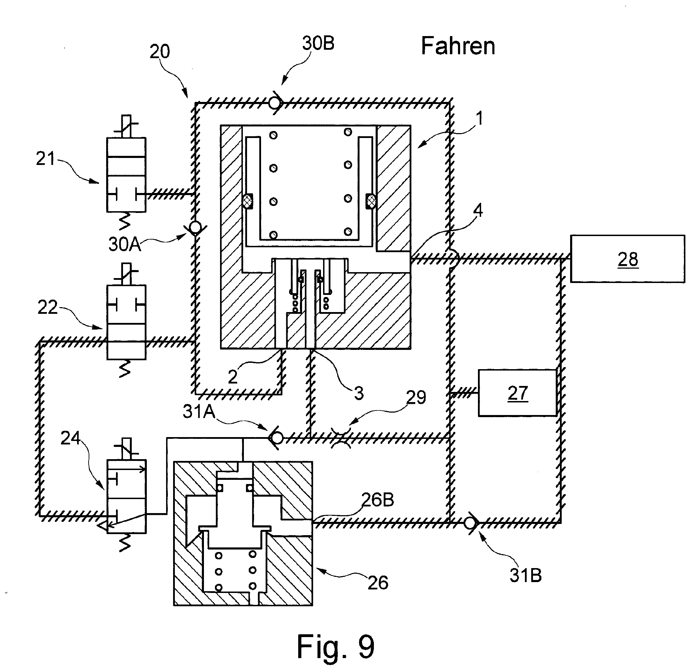

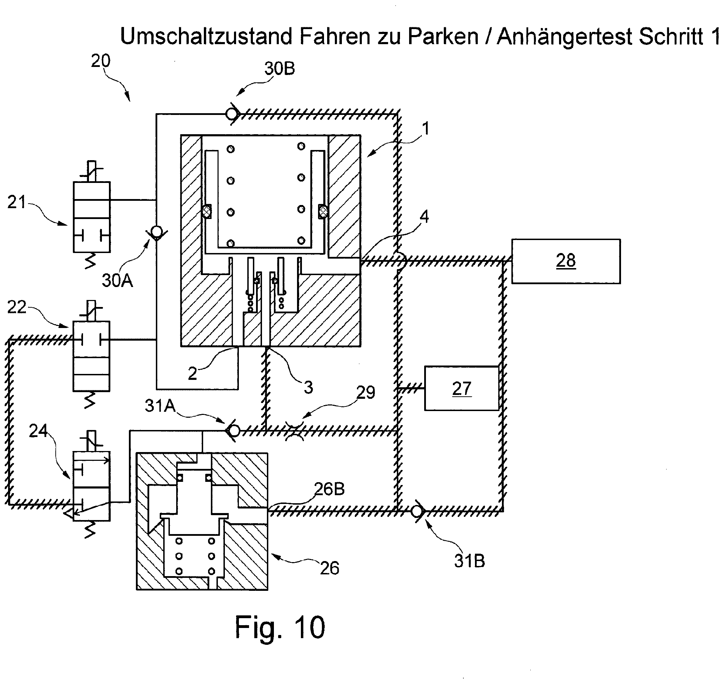

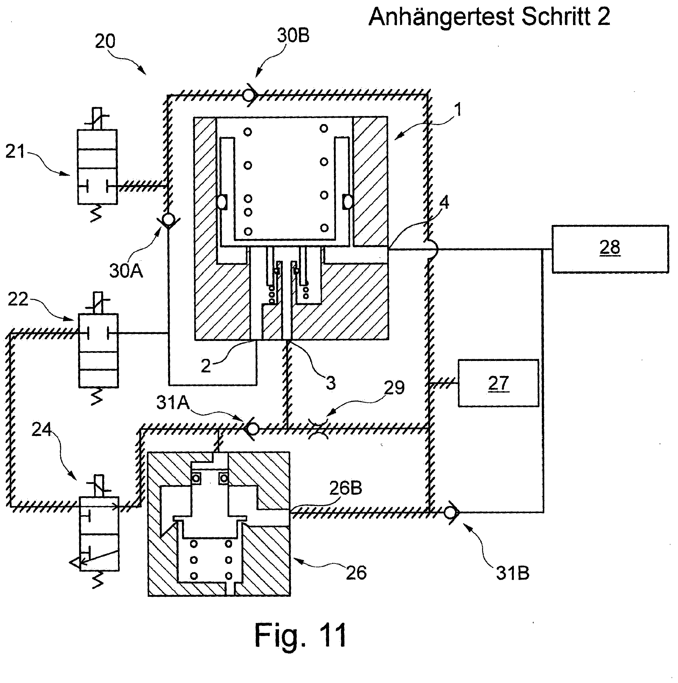

Unter Bezugnahme auf die **Fig. 7-11** werden nachfolgend die strukturellen Unterschiede zum vorigen Ausführungsbeispiel erläutert. Es wird darauf hingewiesen, dass sich bezüglich der Funktion der elektrischen Parkbremsvorrichtung 20 sowie der Steuerventileinrichtung 1 die Ausführungsbeispiele der Figuren 1-6 und 7-11 nicht unterscheiden.

Die Ausführungen zum Ausführungsbeispiel betreffend Figuren 2-6 sind entsprechend anwendbar auf das Ausführungsbeispiel nach den Figuren 7-11.

Insbesondere entsprechen sich Figur 2 und Figur 7, Figur 3 und Figur 8, Figur 4 und Figur 9, Figur 5 und Figur 10 sowie Figur 6 und Figur 11.

Auch in den weiteren Ausführungsbeispiel nach den Figuren 7-11 sind die mit Druckluft von der Druckluftquelle beaufschlagten Verbindungsleitungen im Vergleich zu anderen Leitungen, in denen lediglich Atmosphärendruck herrscht, durch Schraffur hervorgehoben.

Anzumerken ist, dass das weitere Ausführungsbeispiel nach den Figuren 7-11 im Wesentlichen dem ersten Ausführungsbeispiel entspricht, wobei dieses - wie bereits angesprochen - lediglich strukturelle, jedoch keine funktionellen Unterschiede aufweist. Beispielsweise ist beim Vergleich des Ausführungsbeispiels gemäß Figur 2 mit dem Ausführungsbeispiel gemäß Figur 7 zur erwähnen, dass das erste federbelastete Doppelrückschlagventil 23 durch zwei Rückschlagventile 30A und 30B ersetzt wurde. Ferner wurde das zweite federbelastete Doppelrückschlagventil 25 ebenfalls durch zwei Rückschlagventile 31A und 31B ersetzt.

Identisch zu dem Ausführungsbeispiel gemäß Figuren 2-6 ist das Anhängersteuermodul 27 mit dem ersten federbelasteten Doppelrückschlagventil 23 bzw. mit den Rückschlagventilen 30A, 30B verbunden.

In dem Ausführungsbeispiel gemäß den Figuren 2-6 ist über den ersten und zweiten Ausgang 25C, 25D des zweiten federbelasteten Doppelrückschlagventils 25 das Anhängersteuermodul 27 mit dem ersten federbelasteten Doppelrückschlagventil 23 verbunden.

Hingegen ist in dem Ausführungsbeispiel gemäß den Figuren 7-11 das Anhängersteuermodul 27 ohne zwischengeschaltetes Rückschlagventil mit dem Ersatz für das erste federbelastete Doppelrückschlagventil 23 bzw. mit den Rückschlagventilen 30A, 30B verbunden.

Des Weiteren ist in dem Ausführungsbeispiel gemäß Figuren 7-11 die Drossel 29 im Vergleich zu den Figuren 2-6 nicht vor, sondern nach einem Rückschlagventil angeordnet.

Wie bereits angedeutet wird auf weitere Ausführungen hinsichtlich des weiteren Ausführungsbeispiels nach den Figuren 7-11 betreffend der Funktion der Kürze halber auf die Ausführungen betreffend die Ausführungsbeispiele gemäß den Figuren 1 bzw. 2-6 verwiesen.

### BEZUGSZEICHENLISTE

- 1: Steuerventileinrichtung
- 2: erster Arbeitsanschluss
- 3: zweiter Arbeitsanschluss
- 4: dritter Arbeitsanschluss
- 5: Gehäuse
- 6: Gehäusekammer
- 7: Zylinderraum
- 8: Schaltkolben
- 9: Feder
- 10: zweigeteilter Druckraum
- 10A: erster Teilbereich
- 10B: zweiter Teilbereich
- 11: Hülse
- 12: Vorsprung
- 13: O-Ring
- 14: Feder
- 15: O-Ring
- 16: Ventilsitz
- 20: elektrische Parkbremsvorrichtung
- 21: Entlüftungsventil
- 22: Versorgungsventil
- 23: erstes federbelastetes Doppelrückschlagventil
- 23A: Ausgang
- 23B: erster Eingang
- 23C: zweiter Eingang
- 24: Steuer- und Entlüftungsventileinrichtung
- 25: zweites federbelastetes Doppelrückschlagventil
- 25A: erster Eingang
- 25B: zweiter Eingang
- 25C: erster Ausgang
- 25D: zweiter Ausgang
- 26: Spezialventil
- 26A: Steuereingang
- 26B: Eingang
- 26C: Ausgang
- 27: Anhängersteuermodul
- 28: Relaisventil
- 29: Drossel
- 30A: Rückschlagventil
- 30B: Rückschlagventil
- 31A: Rückschlagventil
- 31B: Rückschlagventil

- D: Druckluftquelle

## Patentansprüche

1. Steuerventileinrichtung (1) für eine elektrische Parkbremsvorrichtung (20) eines Fahrzeuges, insbesondere eines Nutzfahrzeuges, wobei die Steuerventileinrichtung (1) einen ersten Arbeitsanschluss (2), einen zweiten Arbeitsanschluss (3), einen dritten Arbeitsanschluss (4), ein Gehäuse (5), eine Gehäusekammer (6), einen Zylinderraum (7), einen im Zylinderraum des Gehäuses geführten Schaltkolben (8), und eine Feder (9), mittels derer der Schaltkolben (8) federbelastet ist, umfasst, **dadurch gekennzeichnet, dass** die Gehäusekammer (6) mit dem dritten Arbeitsanschluss (4) verbunden ist, wobei die Steuerventileinrichtung (1) ferner einen zweigeteilten Druckraum (10) aufweist, an dessen ersten Teilbereich (10A) der erste Arbeitsanschluss (2) und an dessen zweiten Teilbereich (10B) der zweite Arbeitsanschluss (3) angeschlossen ist, wobei in einem ersten Schaltzustand der Steuerventileinrichtung (1) der erste Teilbereich (10A) des zweigeteilten Druckraums (10) vom zweiten Teilbereich (10B) und von der Gehäusekammer (6), insbesondere fluiddicht, getrennt ist, und wobei in einem zweiten Schaltzustand der erste Teilbereich (10A) des zweigeteilten Druckraums (10) mit dem zweiten Teilbereich (10B) und der Gehäusekammer (6) verbunden ist.

2. Steuerventileinrichtung nach Anspruch 1,
**dadurch gekennzeichnet, dass**
der zweigeteilte Druckraum (10) zumindest teilweise symmetrisch ausgebildet ist, wobei vorzugsweise der erste Teilbereich (10A) des zweigeteilten Druckraums (10) konzentrisch zum zweiten Teilbereich (10B) angeordnet ist.

3. Steuerventileinrichtung nach Anspruch 1 oder Anspruch 2,
**dadurch gekennzeichnet, dass**
der erste Teilbereich (10A) des zweigeteilten Druckraums (10) von dem Gehäuse (5) zumindest teilweise begrenzt wird und der zweite Teilbereich (10B) des zweigeteilten Druckraums (10) zumindest teilweise von einem Vorsprung (12) begrenzt wird, der in den ersten Teilbereich (10A) hineinragt.

4. Steuerventileinrichtung nach einem der vorhergehenden Ansprüche,
**dadurch gekennzeichnet, dass**
der zweite Teilbereich (10B) zumindest teilweise von einer im Gehäuse verschieblich geführten Hülse (11) begrenzt wird, insbesondere wobei die Hülse (11) den zweiten Teilbereich (10B) des zweigeteilten Druckraums (10), insbesondere in Richtung des Schaltkolbens (8), variabel vergrößerbar ausbildet.

5. Steuerventileinrichtung nach Anspruch 3 und Anspruch 4,
**dadurch gekennzeichnet, dass**
der Vorsprung (12) und die Hülse (11) verschieblich ineinander geführt sind.

6. Steuerventileinrichtung nach Anspruch 4 oder Anspruch 5,
**dadurch gekennzeichnet, dass**
die verschiebbare Hülse (11) federbelastet ist, vorzugsweise wobei die verschiebbare Hülse (11) derart federbelastet ist, dass im ersten Schaltzustand der zweite Teilbereich (10B) des zweigeteilten Druckraums (10) gegen den Schaltkolben (8) abgedichtet ist.

7. Steuerventileinrichtung nach einem der vorhergehenden Ansprüche,
**dadurch gekennzeichnet, dass**
der zweigeteilte Druckraum (10) derart im Gehäuse (5) der Steuerventileinrichtung (1) angeordnet ist, dass eine Druckbeaufschlagung des zweigeteilten Druckraums (10) den Schaltkolben (8) entgegen der Federkraft der Feder (9) bewegt, sodass bei Druckbeaufschlagung im zweiten Schaltzustand die Gehäusekammer (6) mit dem zweigeteilten Druckraum (10) verbunden ist.

8. Elektrische Parkbremsvorrichtung (20) für eine pneumatische Bremsanlage eines Fahrzeuges, insbesondere eines Nutzfahrzeuges, mit einer Druckluftquelle (D) und einer Steuerventileinrichtung (1) nach einem der Ansprüche 1 bis 7, wobei die Steuerventileinrichtung (1) einen ersten Arbeitsanschluss (2), einen zweiten Arbeitsanschluss (3) und einen dritten Arbeitsanschluss (4) aufweist, wobei die Steuerventileinrichtung (1) wenigstens zwei Schaltzustände umfasst und derart ausgebildet ist, dass in einem ersten Schaltzustand der erste Arbeitsanschluss (2), der zweite (3) und der dritte Arbeitsanschluss (4) voneinander getrennt sind, und dass in einem zweiten Schaltzustand der erste (2), der zweite (3) und der dritte Arbeitsanschluss (4) miteinander verbunden sind.

9. Elektrische Parkbremsvorrichtung nach Anspruch 8,
**dadurch gekennzeichnet, dass**
die Parkbremsvorrichtung (20) ferner ein Entlüftungsventil (21) und ein Versorgungsventil (22) umfasst, wobei der erste Arbeitsanschluss (2) mittels des Versorgungsventils (22) mit der Druckluftquelle (D) verbindbar und von der Druckluftquelle (D) trennbar ist, wobei der erste Arbeitsanschluss (2) mittels des Entlüftungsventils (21) entlüftbar ist, wobei die Parkbremsvorrichtung (20) ferner ein erstes Rückschlagventil (23) mit einem Ausgang (23A), einem ersten Eingang (23B) und einem zweiten Eingang (23C) umfasst, wobei der Ausgang (23A) mit dem Entlüftungsventil (21) verbunden ist, wobei der erste Eingang (23B) mit dem zweiten Arbeitsanschluss (3) verbunden ist, und wobei der zweite Eingang (23C) mit dem ersten Arbeitsanschluss (2) verbunden ist.

10. Elektrische Parkbremsvorrichtung nach Anspruch 8 oder Anspruch 9,
**dadurch gekennzeichnet, dass**
die Parkbremsvorrichtung (20) ferner eine Steuer- und Entlüftungsventileinrichtung (24), ein zweites Rückschlagventil (25) und ein Spezialventil (26) umfasst, wobei der zweite Arbeitsanschluss (3) mittels der Steuer- und Entlüftungsventileinrichtung (24) mit der Druckluftquelle (D) verbindbar und von der Druckluftquelle (D) trennbar ist, wobei das Spezialventil (26) einen Steuereingang (26A), einen Eingang (26B) und einen Ausgang (26C) aufweist, wobei der Steuereingang (26A) des Spezialventils (26) mittels der Steuer- und Entlüftungsventileinrichtung (24) entlüftbar ist, wobei der Eingang (26B) des Spezialventils (10) in Abhängigkeit des am Steuereingang (26A) anliegenden Drucks mit dem Ausgang (26C) des Spezialventils (26) verbindbar oder von dem Ausgang (26C) des Spezialventils (26) trennbar ist.

11. Elektrische Parkbremsvorrichtung nach Anspruch 10,
**dadurch gekennzeichnet, dass**
die Parkbremsvorrichtung (20) ferner ein zweites Rückschlagventil (25) mit zwei Ein- und zwei Ausgängen (25A, 25B, 25C, 25D) umfasst, wobei der erste Eingang (25A) mit der Steuer- und Entlüftungsventileinrichtung (24) und der erste Ausgang (25C) mit dem zweiten Arbeitsanschluss (3) verbunden ist, wobei zwischen dem zweiten Rückschlagventil (25) und der Steuer- und Entlüftungsventileinrichtung (24) das Spezialventil (26) angeordnet ist, dessen Steuereingang (26A) über die Steuer- und Entlüftungsventileinrichtung (24) mit der Druckluftquelle (D) verbindbar ist, und welches in Abhängigkeit des anliegenden Drucks am Steuereingang (26A) öffnet oder schließt, wobei der zweite Ausgang (25D) des zweiten Rückschlagventils (25) mit dem Eingang (26B) des Spezialventils (26) verbunden ist, und wobei der zweite Eingang (25B) des zweiten Rückschlagventils (25) mit dem dritten Arbeitsanschluss (4) der Steuerventileinrichtung (1) verbunden ist.

## Claims

1. Control valve device (1) for an electric parking mechanism (20) of a vehicle, particularly a utility vehicle, such that the control valve device (1) comprises a first working port (2), a second working port (3), a third working port (4), a housing (5), a housing chamber (6), a cylinder space (7), a switching piston (8) guided to move in the cylinder space of the housing, and a spring (9) by means of which the switching piston is spring-loaded,
**characterised in that**
the housing chamber (6) is connected to the third working port (4) and, further, the control valve device (1) comprises a two-part pressure space (10) to the first part-space (10A) of which the first working port (2) and to the second part-space (10B) of which the second working port (3) are respectively connected, so that in a first switching condition of the control valve device (1) the first part-space (10A) of the two-part pressure space (10) is disconnected from the second part-space (10B) and from the housing chamber (6), in particular in a fluid-tight manner, whereas in a second switching condition the first part-space (10A) of the two-part pressure space (10) is connected to the second part-space (10B) and to the housing chamber (6).

2. Control valve device according to Claim 1,
**characterised in that**
the two-part pressure space (10) is configured at least partially symmetrically, such that the first part-space (10A) of the two-part pressure space (10) is preferably arranged concentrically relative to the second part-space (10B).

3. Control valve device according to Claims 1 or 2,
**characterised in that**
the first part-space (10A) of the two-part pressure space (10) is at least partially delimited by the housing (5) and the second part-space (10B) of the two-part pressure space (10) is at least partially delimited by a protuberance (12) that projects into the first part-space (10A).

4. Control valve device according to any of the preceding claims,
**characterised in that**
the second part-space (10B) is at least partially delimited by a sleeve (11) guided movably in the housing, in particular so that the said sleeve (11) forms the second part-space (10B) of the two-part pressure space (10), in such manner that the said second part-space can be enlarged variably, particularly in the direction of the switching piston (8).

5. Control valve device according to Claims 3 and 4,
**characterised in that**
the protuberance (12) and the sleeve (11) are guided movably one inside the other.

6. Control valve device according to Claims 4 or 5,
**characterised in that**
the movable sleeve (11) is spring-loaded, preferably in such manner that the movable sleeve (11) is spring-loaded so that in the first switching condition the second part-space (10B) of the two-part pressure space (10) is sealed relative to the switching piston (8).

7. Control valve device according to any of the preceding claims,
**characterised in that**
the two-part pressure space (10) is arranged in the housing (5) of the control valve device (1) in such manner that when the two-part pressure space (10) is pressurized, the switching piston (8) is moved in opposition to the force of the spring, so that when it is pressurized in the second switching condition the housing chamber (6) is connected to the two-part pressure space (10).

8. Electric parking brake mechanism (20) for a pneumatic brake unit of a vehicle, in particular a utility vehicle, with a compressed-air source (D) and a control valve device (1) according to any of Claims 1 to 7, wherein the control valve device (1) comprises a first working port (2), a second working port (3) and a third working port (4), wherein the control valve device (1) has at least two switching conditions and is designed such that in a first switching condition the first working port (2), the second working port (3) and the third working port (4) are disconnected from one another, and in a second switching condition the first (2), second (3) and third (4) working ports are connected to one another.

9. Electric parking brake mechanism according to Claim 8,
**characterised in that**
the parking brake mechanism (20) further comprises a venting valve (21) and a supply valve (22), wherein the first working port (2) can be connected to the compressed-air source (D) and disconnected from the compressed-air source (D) by means of the supply valve (22), wherein the first working port (2) can be vented by means of the venting valve (21), wherein the parking brake mechanism (20) further comprises a first one-way valve (23) with an outlet (23A), a first inlet (23B) and a second inlet (23C), wherein the outlet (23A) is connected to the venting valve (21), wherein the first inlet (23B) is connected to the second working port (3) and wherein the second inlet (23C) is connected to the first working port (2).

10. Electric parking brake mechanism according to Claims 8 or 9,
**characterised in that**
the parking brake mechanism (20) further comprises a control and venting valve device (24), a second one-way valve (25) and a special valve (26), wherein the second working port (3) can be connected to and disconnected from the compressed-air source (D) by means of the said control and venting valve device (24), wherein the special valve (26) comprises a control inlet (26A), an inlet (26B) and an outlet (26C), wherein the control inlet (26A) of the special valve (26) can be vented by means of the control and venting valve device (24), and wherein, depending on the pressure applied at the control inlet (26A), the inlet (26B) of the special valve (26) can be connected to or disconnected from the outlet (26C) of the special valve (26).

11. Electric parking brake mechanism according to Claim 10,
**characterised in that**
the parking brake mechanism (20) further comprises a second one-way valve (25) with two inlets and two outlets (25A, 25B, 25C, 25D), wherein the first inlet (25A) is connected to the control and venting valve device (24) and the first outlet (25C) is connected to the second working port (3), wherein the special valve (26) is arranged between the second one-way valve (25) and the control and venting valve device (24), the control inlet (26A) of which special valve (26) can be connected to the compressed-air source (D) by means of the control and venting valve device (24), and which, depending on the pressure applied at the control inlet (26A), opens or closes, wherein the second outlet (25D) of the second one-way valve (25) is connected to the inlet (26B) of the special valve (26), and wherein the second inlet (25B) of the second one-way valve (25) is connected to the third working port (4) of the control valve device (1).

## Revendications

1. Dispositif (1) à soupape pilote d'un système (20) électrique de frein de stationnement d'un véhicule, notamment d'un véhicule utilitaire, le dispositif (1) à soupape pilote comprenant un premier raccord (2) de travail, un deuxième raccord (3) de travail, un troisième raccord (4) de travail, un corps (5), une chambre (6) de corps, un espace (7) cylindrique, un piston (8) de commutation guidé dans l'espace cylindrique du corps et un ressort (9) au moyen duquel le piston (8) de commutation peut être soumis à l'action d'un ressort, **caractérisé en ce que** la chambre (6) du corps communique avec le troisième raccord (4) de travail, le dispositif (1) à soupape pilote ayant, en outre, un espace (10) de pression en deux parties, à la première partie (10A) duquel est raccordé le premier raccord (2) de travail et à la deuxième partie (10B) duquel est raccordé le deuxième raccord (3) de travail, dans lequel, dans un premier état de commutation du dispositif (1) à soupape pilote, la première partie (10A) de l'espace (10) de pression en deux parties est séparée, notamment d'une manière étanche au fluide, de la deuxième partie (10B) et de la chambre (6) du corps, et dans lequel, dans un deuxième état de commutation, la première partie (10A) de l'espace (10) de pression en deux parties communique avec la deuxième partie (10B) et avec la chambre (6) du corps.

2. Dispositif à soupape pilote suivant la revendication 1,
**caractérisé en ce que**
l'espace (10) de pression en deux parties est constitué de manière symétrique, au moins en partie, de préférence la première partie (10A) de l'espace (10) de pression en deux parties étant disposée concentriquement à la deuxième partie (10B) .

3. Dispositif à soupape pilote suivant la revendication 1 ou la revendication 2,
**caractérisé en ce que**
la première partie (10A) de l'espace (10) de pression en deux parties est délimitée, au moins en partie, par le corps (5) et la deuxième partie (10B) de l'espace (10) de pression en deux parties est délimitée, au moins en partie, par une saillie (12), qui pénètre dans la première partie (10A).

4. Dispositif à soupape pilote suivant l'une des revendications précédentes,
**caractérisé en ce que**
la deuxième partie (10B) est délimitée, au moins en partie, par un manchon (11) guidé à coulissement dans le corps, dans lequel notamment le manchon (11) constitue, avec possibilité d'agrandissement variable, notamment dans la direction du piston (8) de commutation, la deuxième partie (10B) de l'espace (10) de pression en deux parties.

5. Dispositif à soupape pilote suivant la revendication 3 ou la revendication 4,
**caractérisé en ce que**
la saillie (12) et le manchon (11) sont guidés l'un dans l'autre à coulissement.

6. Dispositif à soupape pilote suivant la revendication 4 ou la revendication 5,
**caractérisé en ce que**
le manchon (11) pouvant coulisser est soumis à l'action d'un ressort, dans lequel, de préférence, le manchon (11) pouvant coulisser est soumis à l'action d'un ressort, de manière à ce que, dans le premier état de commutation, la deuxième partie (10B) de l'espace (10) de pression en deux parties soit rendue étanche par rapport au piston (8) de commutation.

7. Dispositif à soupape pilote suivant l'une des revendications précédentes,
**caractérisé en ce que**
l'espace (10) de pression en deux parties est disposé dans le corps (5) du dispositif (1) à soupape pilote, de manière à ce que l'alimentation en pression de l'espace (10) de pression en deux parties déplace le piston (8) de commutation à l'encontre de la force du ressort (9), de sorte que, lors de l'alimentation en pression dans le deuxième état de commutation, la chambre (6) du corps communique avec l'espace (10) de pression en deux parties.

8. Système (20) électrique de frein de stationnement pour une installation pneumatique de frein d'un véhicule, notamment d'un véhicule utilitaire, comprenant une source (D) d'air comprimé et un dispositif (1) à soupape pilote suivant l'une des revendications 1 à 7, le dispositif (1) à soupape pilote ayant un premier raccord (2) de travail, un deuxième raccord (3) de travail et un troisième raccord (4) de travail, le dispositif (1) à soupape pilote comprenant au moins deux états de commutation et étant constitué de manière à ce que, dans un premier état de commutation, le premier raccord (2) de travail, le deuxième (3) et le troisième raccord (4) de travail soient séparés les uns des autres et en ce que, dans un deuxième état de commutation, le premier (2), le deuxième (3) et le troisième raccord (4) de travail communiquent entre eux.

9. Système électrique de frein de stationnement suivant la revendication 8,
**caractérisé en ce que**
le système (20) de frein de stationnement comprend, en outre, une soupape (21) de purge et une soupape (22) d'alimentation, le premier raccord (2) de travail pouvant communiquer avec la source (D) d'air comprimé au moyen de la soupape (22) d'alimentation et pouvant être séparé de la source (D) d'air comprimé, le premier raccord (2) de travail pouvant être purgé au moyen de la soupape (21) de purge, le système (20) de frein de stationnement comprenant, en outre, un premier clapet antiretour (23), ayant une sortie (23A, une première entrée (23B) et une deuxième entrée (23C), la sortie (23A) communiquant avec la soupape (21) de purge, la première entrée (23B) communiquant avec le deuxième raccord (3) de travail et la deuxième entrée (23C) communiquant avec le premier raccord (2) de travail.

10. Système électrique de frein de stationnement suivant la revendication 8 ou la revendication 9,
**caractérisé en ce que**
le système (20) de frein de stationnement comprend, en outre, un dispositif (24) à soupape pilote et à soupape de purge, un deuxième clapet antiretour (25) et une soupape (26) spéciale, le deuxième raccord (3) de travail pouvant communiquer avec la source (D) d'air comprimé au moyen du dispositif (24) à soupape pilote et à soupape de purge et pouvant être séparé de la source (D) d'air comprimé, la soupape (26) spéciale ayant une entrée (26A) de commande, une entrée (26B) et une sortie (26C), l'entrée (26A) de commande de la soupape (26) spéciale pouvant être purgée au moyen du dispositif (24) à soupape pilote et à soupape de purge, l'entrée (26B) de la soupape (10) spéciale pouvant, en fonction de la pression s'appliquant à l'entrée (26A) de commande, communiquer avec la sortie (26C) de la soupape (26) spéciale ou être séparée de la sortie (26C) de la soupape (26) spéciale.

11. Système électrique de frein de stationnement suivant la revendication 10,
**caractérisé en ce que**
le système (20) de frein de stationnement comprend, en outre, un deuxième clapet antiretour (25) ayant deux entrées et deux sorties (25A, 25B, 25C, 25D), la première entrée (25A) du dispositif (24) de soupape pilote et de soupape de purge et la première sortie (25C) communiquant avec le deuxième raccord (3) de travail, dans lequel, entre le clapet antiretour (25) et le dispositif (24) à soupape pilote et à soupape de purge, est montée la soupape (26) spéciale, dont l'entrée (26A) de commande peut communiquer avec la source (D) d'air comprimé par le dispositif (24) à soupape pilote et à soupape de purge, et qui s'ouvre ou se ferme en fonction de la pression s'appliquant à l'entrée (26A) de commande, la deuxième sortie (25D) du deuxième clapet antiretour (25) communiquant avec l'entrée (26B) de la soupape (26) spéciale et la deuxième entrée (25B) du deuxième clapet antiretour (25) communiquant avec le troisième raccord (4) de travail du dispositif (1) à soupape pilote.
